(19) **Europäisches Patentamt / European Patent Office / Office européen des brevets**

(11) **EP 3 851 814 B1**

(12) **EUROPÄISCHE PATENTSCHRIFT**

(45) Veröffentlichungstag und Bekanntmachung des Hinweises auf die Patenterteilung:
**05.03.2025 Patentblatt 2025/10**

(21) Anmeldenummer: **21151363.5**

(22) Anmeldetag: **13.01.2021**

(51) Internationale Patentklassifikation (IPC):
*H01Q 13/02* (2006.01)   *H01Q 13/08* (2006.01)
*G01F 23/284* (2006.01)   *G01F 23/26* (2022.01)
*H01Q 1/22* (2006.01)

(52) Gemeinsame Patentklassifikation (CPC):
**G01F 23/26; G01F 23/284; H01Q 1/225;
H01Q 13/02; H01Q 13/08**

(54) **FÜLLSTANDSSENSOR ZUR DETEKTION EINES FÜLLSTANDS EINES FÜLLMEDIUMS IN EINEM BEHÄLTER**

FILL LEVEL SENSOR FOR DETECTING A FILLING LEVEL OF A FILLING MEDIUM IN A CONTAINER

CAPTEUR DE NIVEAU DE REMPLISSAGE DESTINÉ À LA DÉTECTION DU NIVEAU DE REMPLISSAGE D'UN MILIEU DE REMPLISSAGE DANS UN RÉCIPIENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.01.2020 DE 102020100998
10.06.2020 DE 102020115459**

(43) Veröffentlichungstag der Anmeldung:
**21.07.2021 Patentblatt 2021/29**

(73) Patentinhaber: **Krohne Messtechnik GmbH
47058 Duisburg (DE)**

(72) Erfinder: **Storch, Robert
58509 Lüdenscheid (DE)**

(74) Vertreter: **Gesthuysen Patentanwälte
Partnerschaftsgesellschaft mbB
Huyssenallee 68
45128 Essen (DE)**

(56) Entgegenhaltungen:
**EP-A2- 3 428 631       DE-A1- 102018 111 058
GB-A- 2 569 540       US-A- 5 675 259
US-A1- 2014 102 181   US-A1- 2019 187 071
US-B2- 6 831 470**

**Beschreibung**

Die Erfindung betrifft einen Füllstandssensor zur Detektion eines Füllstands eines Füllmediums in einem Behälter.

Der Füllstandssensor weist einen Generator mit einer Speiseleitung, eine Antenne, eine Speisung und eine Steuerung auf. Der Generator, die Antenne, die Speisung und die Steuerung sind wesentliche Baugruppen des Füllstandssensors.

Der Generator ist sowohl zur Erzeugung von elektromagnetischen Wellen mit einer Resonanzfrequenz als auch zur Ausgabe der elektromagnetischen Wellen über die Speiseleitung ausgebildet. Dabei weist die Speiseleitung eine Leitungsimpedanz mit einem Leitungsimpedanzwert auf.

Die Speisung ist zwischen der Speiseleitung und der Antenne angeordnet und ist zur Übertragung der elektromagnetischen Wellen von der Speiseleitung zur Antenne ausgebildet. Zum Beispiel ist die Speisung eine weitere Speiseleitung.

Die Antenne ist zur Abstrahlung der elektromagnetischen Wellen hinein in einen Behälter mit einem Füllmedium ausgebildet.

Eine Übertragung der elektromagnetischen Wellen erfolgt in einer Übertragungsrichtung von der Speiseleitung über die Speisung hin zur Antenne. Die von der Antenne abgestrahlten elektromagnetischen Wellen haben eine Ausbreitungsrichtung, die jedenfalls im Wesentlichen mit der Übertragungsrichtung übereinstimmt.

Die Steuerung ist zur Detektion einer Veränderung eines Nahfelds um die Antenne von durch die Antenne abgestrahlten elektromagnetischen Wellen durch eine Füllstandsveränderung eines Füllmediums in einem Behälter ausgebildet. Weiter ist die Steuerung zur Detektion eines Füllstands des Füllmediums in dem Behälter durch Auswertung der detektierten Veränderung des Nahfelds ausgebildet.

Das Nahfeld ist dabei durch die von der Antenne abgestrahlten elektromagnetischen Wellen gebildet und die Veränderung des Nahfelds erfolgt durch die Füllstandsveränderung des Füllmediums in dem Behälter. Durch die Füllstandsveränderung des Füllmediums wird ein anderes Medium, zum Beispiel Luft, im Umfeld der Antenne durch das Füllmedium verdrängt oder umgekehrt. Eine Füllstandsveränderung des Füllmediums im Umfeld der Antenne verändert das Nahfeld der Antenne dann, wenn das Füllmedium und das andere Medium voneinander verschiedene Permittivitäten haben. Das wird im Folgenden vorausgesetzt.

Eine Veränderung des Nahfelds der Antenne bewirkt auch eine Veränderung einer Anpassung der Antenne, wodurch sich auch eine reflektierte Leistung über der Frequenz verändert. Zur Detektion eines Füllstands eines Füllmediums in einem Behälter kann somit entweder eine absolute reflektierte Leistung bei einer Frequenz oder ein Verlauf der reflektierten Leistung über der Frequenz verwendet werden. Die Verwendung der absoluten reflektierten Leistung bei einer Frequenz ist jedoch anfällig für Toleranzen und Umgebungsbedingungen. Das ist bei einem Verlauf der reflektierten Leistung über der Frequenz nicht der Fall und zusätzlich kann zwischen unterschiedlichen Füllmedien unterschieden werden, wenn diese unterschiedlichen Permittivitäten aufweisen.

Aus dem Stand der Technik sind zum Beispiel Füllstandssensoren mit planaren Patchantennen als Antennen in Verbindung mit Oberflächenwellenresonatoren bekannt. Dabei sind Patchantennen Lambda-Halbe-Resonatoren. Bekannt sind auch Füllstandssensoren mit Lambda-Viertel-Resonatoren als Antennen. Ein Nachteil dieser Füllstandssensoren ist eine Empfindlichkeit für Veränderungen des Nahfelds um die Antenne, die nur die Detektion von Füllständen von Füllmedien gewährleistet, deren Permittivität größer als ein bestimmter Permittivitätswert ist, sodass diese Füllstandssensoren für Füllmedien mit geringerer Permittivität nicht geeignet sind. Weiter erzeugen Patchantennen parasitäre Resonanzen insbesondere in einem kleinen Behälter, wodurch die Detektion eines Füllstands eines Mediums im Behälter erschwert ist. Darüber hinaus ist die Realisierung von Patchantennen mit hoher Empfindlichkeit, die von einem Medium in einem Behälter getrennt sind, schwierig.

Die Dokumente US 5 675 259 A und GB 2 569 540 A zeigen Füllstandssensoren aus dem Stand der Technik.

Eine Aufgabe der vorliegenden Erfindung ist daher die Angabe eines Füllstandssensors mit vergrößerter Empfindlichkeit, sodass sie auch für Medien mit geringerer Permittivität geeignet sind.

Die Aufgabe ist durch einen Füllstandssensor mit den Merkmalen von Patentanspruch 1 gelöst.

Bei dem erfindungsgemäßen Füllstandssensor weist die Speisung eine Resonanzschaltung auf. Die Resonanzschaltung und die Antenne zusammengenommen weisen in der Übertragungsrichtung eine Resonanz-Eingangsimpedanz auf. Die Resonanzschaltung transformiert die Resonanz-Eingangsimpedanz bei der Resonanzfrequenz in eine reelle Impedanz mit einem vorgegebenen Resonanz-Impedanzwert. Die Antenne weist eine von der Resonanzfrequenz verschiedene Antennenresonanzfrequenz auf. Dabei ist das Nahfeld der Antenne frei von einer Beeinflussung durch ein Füllmedium und ist stattdessen von einem anderen Medium oder einem Vakuum umgeben. Bei dem anderen Medium handelt es sich vorzugsweise um Luft. Dabei ist zu berücksichtigen, dass das andere Medium und das Füllmedium voneinander verschiedene Permittivitäten aufweisen. Eine Veränderung des Nahfelds um die Antenne durch eine Füllstandsveränderung eines Füllmediums zum Beispiel in Richtung auf die Antenne bewirkt eine Verringerung der Resonanzfrequenz, wenn die zuvor durchgeführte Transformation mit Luft als weiterem Medium durchgeführt worden ist und das Füllmedium eine größere Permittivität als Luft aufweist.

Demnach ist die Resonanzfrequenz keine feste Frequenz, sondern liegt in einem Resonanzfrequenzbereich und ist der Generator ausgebildet, elektromagnetische Wellen in diesem Resonanzfrequenzbereich zur erzeugen. Die jeweilige Resonanzfrequenz ist dabei abhängig vom Nahfeld der Antenne.

Die Ausbildung der Steuerung zur Detektion einer Veränderung des Nahfelds um die Antenne umfasst zum Beispiel eine Auswertung der Resonanz-Eingangsimpedanz.

Der erfindungsgemäße Füllstandssensor hat gegenüber dem beschriebenen aus dem Stand der Technik bekannten Füllstandssensor den Vorteil einer vergrößerten Empfindlichkeit für Veränderungen des Nahfelds um die Antenne, sodass er auch die Detektion von Füllständen von Füllmedien mit geringerer Permittivität gewährleistet.

In einer Ausgestaltung des Füllstandssensors ist vorgesehen, dass die Speisung zusätzlich eine Abschlussschaltung aufweist. Die Abschlussschaltung, die Resonanzschaltung und die Antenne zusammengenommen weisen in der Übertragungsrichtung dann eine Abschluss-Eingangsimpedanz auf. Die Abschlussschaltung stellt die Abschluss-Eingangsimpedanz auf den Leitungsimpedanzwert ein. Wenn der Leitungsimpedanzwert der Speiseleitung zum Beispiel 50 Ohm beträgt, dann beträgt auch ein Wert der Abschluss-Eingangsimpedanz 50 Ohm. Somit treten an einem Übergang zwischen der Speisung und der Speiseleitung keine Reflexionen auf. Die Ausbildung der Steuerung zur Detektion einer Veränderung des Nahfelds um die Antenne umfasst zum Beispiel eine Auswertung einer Verschiebung der Resonanzfrequenz. Die oben beschriebene Verringerung der Resonanzfrequenz ist eine solche Verschiebung.

In einer Weiterbildung der vorstehenden Ausgestaltung ist vorgesehen, dass die Abschlussschaltung eine Lamdba-Viertel-Leitung aufweist. Dabei ist die Lambda-Viertel-Leitung vorzugsweise unter Verwendung einer Luftstrecke realisiert. In einer besonders bevorzugten Ausgestaltung besteht die Abschlussschaltung aus einer Lambda-Viertel-Leitung.

In einer weiteren Ausgestaltung ist vorgesehen, dass die Antennenresonanzfrequenz größer als die Resonanzfrequenz ist. Das hat den Vorteil, dass die Antenne kleiner ist, als wenn die Antennenresonanzfrequenz kleiner als die Resonanzfrequenz wäre. Ein weiterer Vorteil ist, dass der Resonanzfrequenzbereich größer ist. Andernfalls wäre der Resonanzfrequenzbereich auf einen Frequenzbereich zwischen der Antennenresonanzfrequenz und der ersten Oberwelle begrenzt.

Grundsätzlich ist der Generator zur Erzeugung von elektromagnetischen Wellen mit einer beliebigen Resonanzfrequenz ausgebildet. Für die Detektion eines Füllstands eines Mediums in einem Behälter haben sich jedoch insbesondere Resonanzfrequenzen bewährt, die in einem Frequenzbereich von Mikrowellen liegen. Ein Frequenzbereich von Mikrowellen ist zum Beispiel der Frequenzbereich von 1 GHz bis 300 GHz. Deshalb ist in einer Ausgestaltung des Füllstandssensors vorgesehen, dass der Generator zur Erzeugung von elektromagnetischen Wellen mit einer Resonanzfrequenz ausgebildet ist, die in einem Frequenzbereich von Mikrowellen liegt.

In einer weiteren Ausgestaltung ist vorgesehen, dass die Antenne zum unmittelbaren Kontakt mit dem Füllmedium ausgebildet ist. Die Alternative zum unmittelbaren Kontakt ist ein mittelbarer Kontakt der Antenne mit dem Füllmedium. Der unmittelbare hat gegenüber dem mittelbaren Kontakt den Vorteil, dass geringere Veränderungen des Nahfelds um die Antenne detektierbar sind, wodurch die Empfindlichkeit weiter vergrößert ist. Dadurch ist die Detektion von Füllständen von Füllmedien mit noch geringerer Permittivität gewährleistet.

In einer weiteren Ausgestaltung ist vorgesehen, dass die Steuerung zusätzlich zur Signalisierung des detektierten Füllstands eines Füllmediums ausgebildet ist. Zum Beispiel weist die Steuerung eine Busschnittstelle auf und die Signalisierung erfolgt durch Übertragung einer entsprechenden Busnachricht über die Busschnittstelle und einen Bus zu einer Leitwarte, wo diese dann für einen Benutzer angezeigt wird.

In einer weiteren Ausgestaltung ist vorgesehen, dass die Speisung einen zylinderförmigen Innenleiter und einen hohlzylinderförmigen Außenleiter zur Übertragung der elektromagnetischen Wellen aufweist. Weiter sind der Außenleiter und der Innenleiter koaxial zueinander angeordnet. Folglich ist der Außenleiter um den Innenleiter angeordnet. Eine solche koaxiale Speisung hat vorteilhafte Eigenschaften für die Übertragung von elektromagnetischen Wellen.

Vorzugsweise bildet dann auch ein Abschnitt des Innenleiters die Antenne. Aus dem Stand der Technik bekannte Füllstandssensoren weisen planare Patchantennen als Antennen auf. Im Vergleich zu einer planaren Patchantenne ist der Abschnitt des Innenleiters als Antenne kleiner, wodurch auch der Füllstandssensor kleiner ist. Durch die geringere Größe ist der Füllstandssensor auch für Anwendungen geeignet, die nur entsprechend wenig Bauraum bieten. Weiter wird durch den Abschnitt des Innenleiters als Antenne im Gegensatz zu einer Patchantenne nur ein Nahfeld angeregt, weshalb die Antenne auch für entsprechend kleinere Behälter geeignet ist.

In einer weiteren Ausgestaltung des Füllstandssensors ist vorgesehen, dass die Resonanzschaltung und/oder die Abschlussschaltung zwischen dem Innenleiter und dem Außenleiter angeordnet sind bzw. ist. Diese Anordnung der Resonanzschaltung und/oder der Abschlussschaltung resultiert in einer weiteren Reduktion der Größe des Füllstandssensors und bewirkt vorteilhafte elektrische Eigenschaften für die elektromagnetischen Wellen.

Oftmals sind Füllstände von Füllmedien in Behältern zu bestimmen, wobei die Füllmedien Temperaturen, insbesondere hohe Temperaturen, aufweisen, welche eine thermische Beanspruchung zum Beispiel für den Generator und die Steuerung darstellen und ihre Funktionen beeinträchtigen. Da die Abschluss-Eingangsimpedanz auf den Leitungsimpedanzwert eingestellt ist, treten keine Reflexionen am Übergang zwischen Speisung und Speiseleitung auf, weshalb der Generator und auch die Steuerung beabstandet von der Speisung angeordnet werden können, wodurch diese von Füllmedien thermisch entkoppelt sind und ihre thermische Belastung reduziert ist. Um auch die thermische Belastung der Speisung zu reduzieren, ist in einer Ausgestaltung des Füllstandssensors vorgesehen, dass der Außenleiter Kühlrippen aufweist. Diese Kühlrippen sind ausgebildet, Wärme, die von einem Füllmedium auf die Speisung übertragen wird, an eine Umgebung des Füllstandssensors abzuleiten.

In einer weiteren Ausgestaltung des Füllstandssensors ist vorgesehen, dass die Resonanzschaltung ein Dielektrikum und einen Hochfrequenz-Absorber aufweist. Dabei ist das Dielektrikum vorzugsweise ein Glas, insbesondere ein metallverschmolzenes Glas. Wenn der Füllstandssensor die zuvor beschriebene koaxiale Speisung aufweist, dann besteht in einer besonders bevorzugten Ausgestaltung die Resonanzschaltung aus dem Dielektrikum, dem Hochfrequenz-Absorber und dem Innenleiter.

Ein Behälter mit einem Innenraum für ein Füllmedium, bei dem ein Füllstand des Füllmediums zu detektieren ist, weist eine Wandung auf, an welcher der Füllstandssensor angeordnet ist. Wenn die Antenne des Füllstandssensors in unmittelbaren Kontakt mit dem Füllmedium bei einem bestimmten Füllstand stehen soll, muss in der Wandung des Behälters eine Öffnung sein. Deshalb weist der Füllstandssensor in einer weiteren Ausgestaltung ein Prozessfenster auf, welches die Öffnung in der Wandung eines Behälters verschließt und die Antenne in dem Innenraum des Behälters anordnet.

In einer Weiterbildung der vorstehenden Ausgestaltung in Verbindung mit einer Resonanzschaltung, die ein Dielektrikum aufweist, ist vorgesehen, dass das Dielektrikum zusätzlich auch das Prozessfenster ist. Das Dielektrikum gewährleistet eine effektive, robuste und chemisch beständige Trennung des übrigen Füllstandssensors vom Medium.

In einer weiteren Ausgestaltung ist vorgesehen, dass der Resonanz-Impedanzwert im Intervall von 150 Ohm bis 300 Ohm liegt.

Bei aus dem Stand der Technik bekannten Füllstandssensoren, die an einem Behälter angeordnet sind, kommt es oftmals vor, dass das Nahfeld um die Antenne durch Anregung höherer Moden der elektromagnetischen Wellen im Behälter beeinträchtigt wird, die von den abgestrahlten elektromagnetischen Wellen insbesondere im Bereich eines Übergangs der Speisung und/oder Antenne in den Behälter angeregt werden. Die Anregung erfolgt durch Unstetigkeiten eines elektromagnetischen Felds der elektromagnetischen Wellen am Übergang. Höhere Moden sind Moden oberhalb der Grundmode einer elektromagnetischen Welle. Auch der Behälter selbst ist oftmals ein Hohlleiter für die Übertragung von elektromagnetischen Wellen. Werden durch die elektromagnetischen Wellen in den Behälter nun Hohlleitermoden angeregt, können sich stehende Wellen im Behälter ausbilden, welche zu Mehrdeutigkeiten bei der Detektion einer Veränderung des Nahfelds führen. Wenn der Behälter ein Hohlzylinder ist, wird die Grundmode anhand folgender Formel berechnet:

$$f = \frac{1,8412 \cdot c_0}{2\pi \cdot r \cdot \sqrt{\varepsilon_r}}$$

Um Hohlleitermoden in einem Behälter zu vermeiden, ist deshalb in einer weiteren Ausgestaltung vorgesehen, dass der Füllstandssensor an der Antenne ein Modenfilter aufweist und dass das Modenfilter ausgebildet ist, die Anregung höherer Moden der elektromagnetischen Wellen in einem Behälter zu vermeiden.

In einer weiteren Ausgestaltung ist vorgesehen, dass das Modenfilter ein Horn mit einem Horninnenraum aufweist, dass die Antenne in den Horninnenraum hineinragt und dass sich der Horninnenraum in der Übertragungsrichtung stetig aufweitet. Dabei werden die von der Antenne abgestrahlten elektromagnetischen Wellen vom Horn im Horninnenraum geführt, wodurch Unstetigkeiten für die elektromagnetischen Wellen am Übergang von der Antenne in den Behälter jedenfalls reduziert oder sogar vermieden werden.

Vorzugsweise ist eine Querschnittsfläche in Bezug auf die Übertragungsrichtung des Horninnenraums kreisrund und ist ein Radius dieser Querschnittsfläche derart unter Berücksichtigung einer Geometrie eines Innenraums eines Behälters und einer höchsten anzunehmenden Permittivität eines Füllmediums bestimmt, sodass nur eine Anregung von oberhalb der Grundmode liegenden ausbreitungsfähigen höheren Moden der elektromagnetischen Wellen im Behälter erfolgt, deren Frequenzen oberhalb der Resonanzfrequenz liegen. Bevorzugt ist dabei der Radius ein minimaler Radius des Horninnenraums. Da sich der Horninnenraum in der Übertragungsrichtung stetig aufweitet, ist der minimale Radius des Horninnenraums an dem Ende des Horns, in welchen die Antenne hineinragt.

In einer weiteren Ausgestaltung ist vorgesehen, dass das Horn Ausnehmungen zum Eindringen eines Füllmediums in den Horninnenraum aufweist. Auf diese Weise ist gewährleistet, dass bei einer Füllstandsveränderung eines Füllmediums im Bereich des Horns sich keine Gaseinschlüsse im Horninnenraum bilden, sondern der Horninnenraum entsprechend dem Füllstand des Füllmediums mit dem Füllmedium gefüllt ist.

Im Einzelnen ist eine Vielzahl von Möglichkeiten gegeben, den Füllstandssensor auszugestalten und weiterzubilden. Dazu wird verwiesen sowohl auf die dem Patentanspruch 1 nachgeordneten Patentansprüche als auch auf die nachfolgende Beschreibung eines bevorzugten Ausführungsbeispiels in Verbindung mit der Zeichnung. In der Zeichnung zeigt

Fig. 1     ein Ausführungsbeispiel eines Füllstandssensors, der in einer Wandung eines Behälters angeordnet ist,

Fig. 2     das Ausführungsbeispiel des Füllstandssensors in einer Schnittdarstellung

Fig. 3a     ein Ausführungsbeispiel eines Modenfilters in einer Schnittdarstellung und

Fig. 3b     das Ausführungsbeispiel des Modenfilters in einer perspektivischen Darstellung.

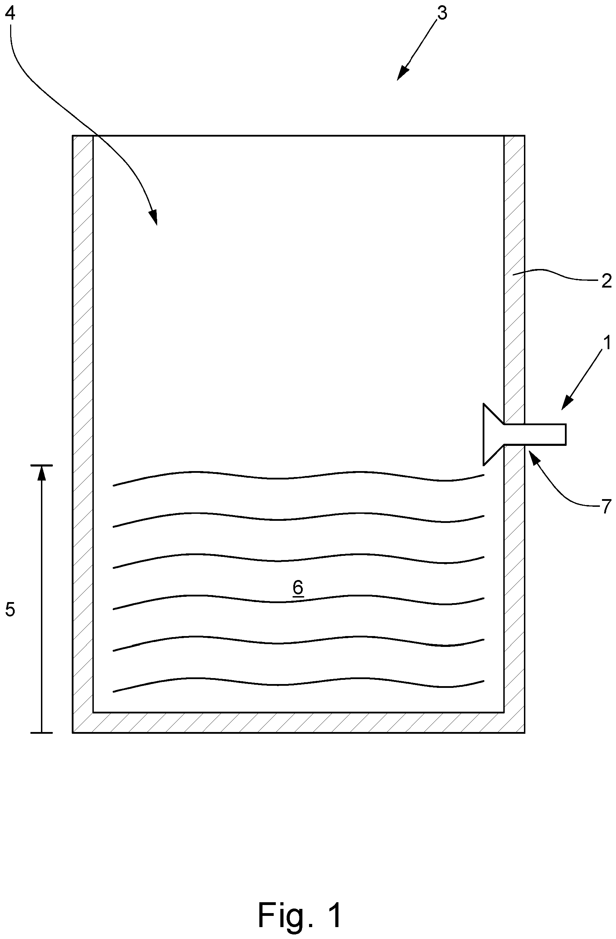

Fig. 1 zeigt abstrahiert ein Ausführungsbeispiel eines Füllstandssensors 1 zur Detektion eines Füllstands eines Füllmediums in einem Behälter. Der Füllstandssensor 1 ist an einer Wandung 2 eines Behälters 3 angeordnet. Der Behälter 3 weist einen Innenraum 4 auf. Der Innenraum 4 weist einen Füllstand 5 eines Füllmediums 6 auf. Oberhalb des Füllmediums 6 ist Luft als ein anderes Medium. Das Füllmedium 6 und die Luft weisen voneinander verschiedene Permittivitäten auf. In der Wandung 2 des Behälters 3 ist eine Öffnung 7 ausgebildet, durch welche der Füllstandssensor 1 Zugang zum Innenraum 4 des Behälters 3 hat.

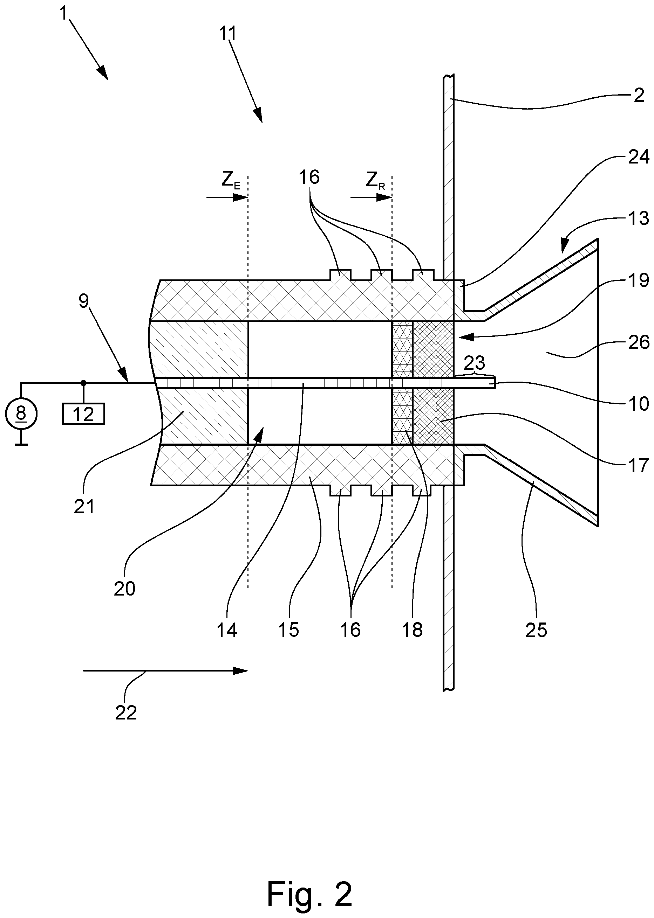

Fig. 2 zeigt abstrahiert einen Längsschnitt des Füllstandssensors 1 aus Fig. 1. Der Füllstandssensor 1 weist einen Generator 8 mit einer Speiseleitung 9, eine Antenne 10, eine Speisung 11, eine Steuerung 12 und ein Modenfilter 13 auf. Der Generator 8 ist zur Erzeugung von elektromagnetischen Wellen mit einer Resonanzfrequenz und zur Ausgabe dieser über die Speiseleitung 9 ausgebildet. Die Resonanzfrequenz liegt bei 6 GHz und damit in einem Frequenzbereich von Mikrowellen. Die Speiseleitung 9 weist eine Leitungsimpedanz mit einem Leitungsimpedanzwert von 50 Ohm auf.

Die Speisung 11 ist zwischen der Speiseleitung 9 und der Antenne 10 angeordnet und zur Übertragung der elektromagnetischen Wellen von der Speiseleitung 9 zur Antenne 10 hin ausgebildet.

Die Speisung 11 weist einen zylinderförmigen Innenleiter 14 und einen hohlzylinderförmigen Außenleiter 15 zur Übertragung der elektromagnetischen Wellen auf. Der Außenleiter 15 und der Innenleiter 14 sind koaxial zueinander angeordnet und weisen kreisrunde Querschnittskonturen auf. Weiter weist der Außenleiter 15 Kühlrippen 16 auf. Die Kühlrippen 16 sind ausgebildet, Wärme, die von dem Füllmedium 6 auf die Speisung 11 übertragen wird, an die Umgebung abzuleiten. Die Speisung 11 weist darüber hinaus ein Dielektrikum 17 in Form eines metallverschmolzenen Glases und einen Hochfrequenz-Absorber 18 auf. Dabei dient das Dielektrikum 17 auch als ein Prozessfenster. Das Dielektrikum 17 verschließt zusammen mit dem Außenleiter 15 die Öffnung 7 in der Wandung 2 des Behälters 3.

Demnach ist das Dielektrikum 17 auch ausgebildet, beständig gegen das Füllmedium 6 und gegen Druck und Temperatur im Behälter 3 zu sein. Sowohl das Dielektrikum 17 als auch der Hochfrequenz-Absorber 18 sind ringförmig ausgebildet und zwischen dem zylinderförmigen Innenleiter 14 und dem hohlzylinderförmigen Außenleiter 15 angeordnet.

Die Speisung 11 weist eine Resonanzschaltung 19 und eine Abschlussschaltung 20 auf. Dabei weist die Resonanzschaltung 19 das Dielektrikum 17 und den Hochfrequenz-Absorber 18 auf. Die Abschlussschaltung 20 weist eine Lambda-Viertel-Leitung auf, wobei diese unter Verwendung einer Luftstrecke realisiert ist. Somit sind sowohl die Resonanzschaltung 19 als auch die Abschlussschaltung 20 zwischen dem Innenleiter 14 und dem Außenleiter 15 angeordnet. Im vorliegenden Ausführungsbeispiel hat die Speiseleitung 9 den gleichen Innenleiter 14 und den gleichen Außenleiter 15 wie die Speisung 11 und ein Speisedielektrikum 21 zwischen dem Innenleiter 14 und dem Außenleiter 15. Auch ist die Speiseleitung 9 im Bereich von Generator 8 und Steuerung 12 als einfache Linie dargestellt.

Eine Übertragung der elektromagnetischen Wellen in einer Übertragungsrichtung 22 erfolgt von der Speiseleitung 9 über die Speisung 11 hin zur Antenne 10. Die Antenne 10 ist zur Abstrahlung der elektromagnetischen Wellen hinein in den Innenraum 4 des Behälters 3 mit dem Füllmedium 6 ausgebildet. Ein Abschnitt 23 des Innenleiters 14 bildet die Antenne 10, indem der Abschnitt 23 über das Dielektrikum 17 in der Übertragungsrichtung 22 hinausragt. Die Antenne 10 ist zum unmittelbaren Kontakt mit dem Füllmedium 6 ausgebildet. Bei einem ausreichend hohen Füllstand 5 des Mediums 6 ist die Antenne 10 in unmittelbaren Kontakt mit dem Füllmedium 6.

In der Übertragungsrichtung 22 weisen die Resonanzschaltung 19 und die Antenne 10 zusammengenommen eine Resonanzeingangs-Impedanz $Z_R$ auf. Die Antenne liefert zur Resonanz-Eingangsimpedanz $Z_R$ insbesondere einen kapazitiven Beitrag. Die Resonanzschaltung 19 transformiert die Resonanz-Eingangsimpedanz $Z_R$ bei der Resonanzfrequenz und ohne eine Beeinflussung des Nahfelds der Antenne 10 durch das Füllmedium 6 in eine reelle Impedanz mit einem vorgebenen Resonanz-Impedanzwert $Z_R$ = 200 Ohm. Die Transformation erfolgt demnach vor einer Detektion eines Füllstands 5 des Füllmediums 6, also vor dem produktiven Einsatz des Füllstandssensors 1.

In der Übertragungsrichtung 22 weisen die Abschlussschaltung 20, die Resonanzschaltung 19 und die Antenne 10 zusammengenommen eine Abschluss-Eingangsimpedanz $Z_E$ auf. Die Abschlussschaltung 20 stellt die Abschluss-Eingangsimpedanz $Z_E$ auf den Leitungsimpedanzwert von 50 Ohm ein. Da die Leitungsimpedanz der Speiseleitung 9 und die Abschluss-Eingangsimpedanz $Z_E$ gleich sind, erzeugen die elektromagnetischen Wellen am Übergang von der Speiseleitung 9 auf die Speisung 11 keine Reflexionen.

Die Speisung 11 mit ihren wesentlichen Baugruppen zylinderförmiger Innenleiter 14, hohlzylinderförmiger Außenleiter 15, ringförmiges Dielektrikum 17 und ringförmiger Hochfrequenz-Absorber sind demnach koaxial ausgebildet.

Die Steuerung 12 ist zur Detektion einer Veränderung eines Nahfelds um die Antenne 10 von durch die Antenne 10 abgestrahlten elektromagnetischen Wellen durch eine Veränderung des Füllstands 5 des Füllmediums 6 in dem Innenraum 4 des Behälters 3 ausgebildet. Eine Veränderung des Nahfelds wird bewirkt durch eine Veränderung des Füllstands 5 des Füllmediums 6 im Innenraum 4 des Behälters 3 in der Nähe der Antenne 10, da das Füllmedium 6 und Luft voneinander verschiedene Permittivitäten haben. Eine Veränderung des Nahfelds bewirkt eine Veränderung der Anpassung der Antenne 10, wodurch sich auch eine reflektierte Leistung über der Frequenz verändert. Eine Veränderung des Nahfelds um die Antenne 10 durch eine Veränderung des Füllstands 5 des Mediums 6 zum Beispiel in Richtung auf die Antenne 10 bewirkt eine Verringerung der Resonanzfrequenz. Zur Detektion einer Veränderung der reflektierten Leistung ist die Steuerung 12 im vorliegenden Ausführungsbeispiel mit der Speiseleitung 9 verbunden.

Weiter ist die Steuerung 12 zur Detektion des Füllstands des Füllmediums 6 in dem Innenraum 4 durch Auswertung der detektierten Veränderung des Nahfelds ausgebildet. Auch ist die Steuerung 12 zur Signalisierung des detektierten Füllstands des Füllmediums 6 ausgebildet.

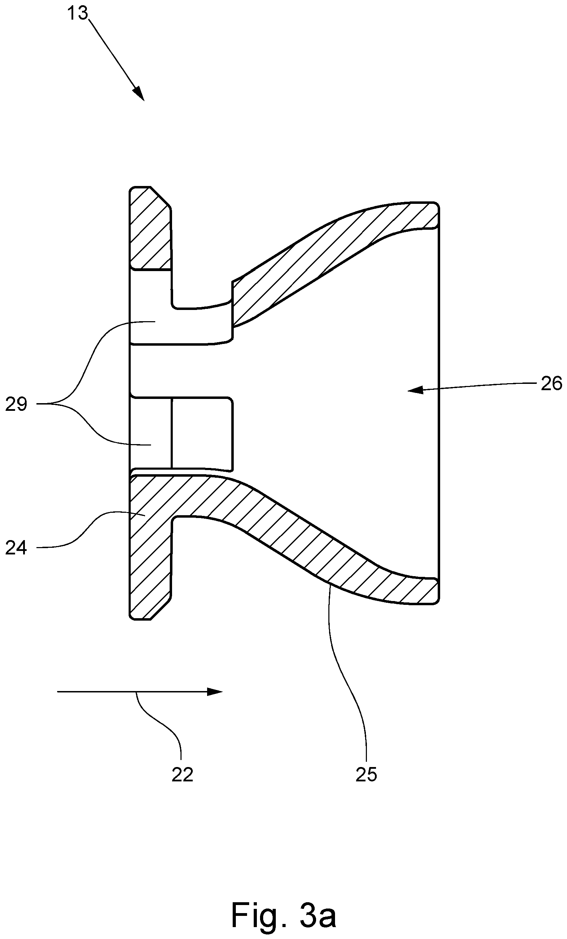

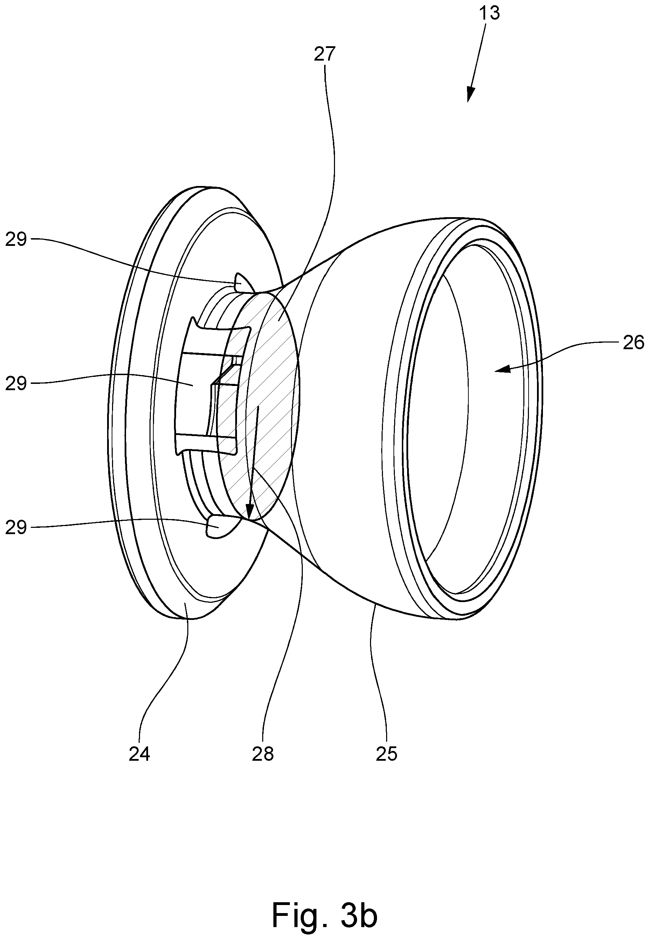

Fig. 3a ist ein Längsschnitt durch ein Ausführungsbeispiel eines Modenfilters 13 und Fig. 3b ist eine perspektivische Ansicht dieses Modenfilters 13. Das Modenfilter 13 ist ausgebildet, eine Ausbreitung höherer Moden der elektromagnetischen Wellen in dem Innenraum 4 des Behälters 3 zu vermeiden. Das Modenfilter 13 weist einen Kragen 24 und ein Horn 25 mit einem Horninnenraum 26 auf. Der Horninnenraum 26 führt die von der Antenne 10 abgestrahlten elektromagnetischen Wellen. Der Kragen 24 dient in diesem Ausführungsbeispiel zur Anordnung des Modenfilters 13 auf der Speisung 11. In anderen Ausführungsbeispielen dient er der Anordnung auf der Wandung 2 des Behälters 3. Wenn das Modenfilter 13 angeordnet ist, dann ragt die Antenne 10 in den Horninnenraum 26 hinein. Der Horninnenraum 26 weitet sich stetig in der Übertragungsrichtung 22 auf.

Der Horninnenraum 26 ist in diesem Ausführungsbeispiel rotationssymmetrisch bezüglich der Ausbreitungsrichtung 22 ausgebildet. Somit sind alle Querschnittsflächen in Bezug auf die Übertragungsrichtung 22 des Horninnenraums 26 kreisrund. Insbesondere ist eine Querschnittsfläche 27 in Bezug auf die Übertragungsrichtung 22 des Horninnenraums 26 kreisrund und ist ein Radius 28 der Querschnittsfläche 27 derart unter Berücksichtigung einer Geometrie des Innenraums 4 des Behälters 3 und einer höchsten anzunehmenden Permittivität des Füllmediums 6 bestimmt, sodass eine Ausbreitung höherer Moden der elektromagnetischen Wellen im Innenraum 4 des Behälters 3 vermieden wird. Der Radius 28 ist ein minimaler Radius des Horninnenraums 26. Die Antenne 10 durchtritt die Querschnittsfläche 27. Sie ist also dort im Horninnenraum 26, wo dieser den minimalen Radius hat.

Das Horn 13 weist drei Ausnehmungen 29 zum Eindringen des Füllmediums 6 in den Horninnenraum 26 auf. Auf diese Weise ist gewährleistet, dass Veränderungen des Füllstands 5 des Füllmediums 6 im Bereich des Horns 25 keine Lufteinschlüsse im Horninnenraum 26 zur Folge haben, sondern dass der Horninnenraum 26 entsprechend dem Füllstand 5 des Füllmediums 6 mit dem Füllmedium 6 gefüllt ist.

**Bezugszeichen**

| 1 | Füllstandssensor |
| 2 | Wandung |
| 3 | Behälter |
| 4 | Innenraum |
| 5 | Füllstand |
| 6 | Füllmedium |
| 7 | Öffnung |
| 8 | Generator |
| 9 | Speiseleitung |
| 10 | Antenne |
| 11 | Speisung |
| 12 | Steuerung |
| 13 | Modenfilter |
| 14 | Innenleiter |
| 15 | Außenleiter |
| 16 | Kühlrippen |
| 17 | Dielektrikum |
| 18 | Hochfrequenz-Absorber |
| 19 | Resonanzschaltung |
| 20 | Abschlussschaltung |
| 21 | Speisedielektrikum |
| 22 | Übertragungsrichtung |
| 23 | Abschnitt |
| 24 | Kragen |
| 25 | Horn |
| 26 | Horninnenraum |
| 27 | Querschnittsfläche |
| 28 | Radius |
| 29 | Ausnehmung |
| $Z_R$ | Resonanz-Eingangsimpedanz |
| $Z_E$ | Abschluss-Eingangsimpedanz |

**Patentansprüche**

1. Füllstandssensor (1) zur Detektion eines Füllstands eines Füllmediums in einem Behälter,

   - wobei der Füllstandssensor (1) einen Generator (8) mit einer Speiseleitung (9), eine Antenne

(10), eine Speisung (11) und eine Steuerung (12) aufweist,

- wobei der Generator (8) zur Erzeugung von elektromagnetischen Wellen mit einer Resonanzfrequenz und Ausgabe der elektromagnetischen Wellen über die eine Leitungsimpedanz mit einem Leitungsimpedanzwert aufweisende Speiseleitung (9) ausgebildet ist,
- wobei die Speisung (11) zwischen der Speiseleitung (9) und der Antenne (10) angeordnet und zur Übertragung der elektromagnetischen Wellen von der Speiseleitung (9) zur Antenne (10) hin ausgebildet ist,

**dadurch gekennzeichnet, daß**

die Antenne (10) zur Abstrahlung der elektromagnetischen Wellen hinein in einen Behälter mit einem Füllmedium ausgebildet ist,

daß eine Übertragung der elektromagnetischen Wellen in einer Übertragungsrichtung (22) von der Speiseleitung (9) über die Speisung (11) hin zur Antenne (10) erfolgt,

daß die Steuerung (12) zur Detektion einer Veränderung eines Nahfelds um die Antenne (10) von durch die Antenne (10) abgestrahlten elektromagnetischen Wellen durch eine Füllstandsveränderung eines Füllmediums in einem Behälter und zur Detektion eines Füllstands des Füllmediums im Behälter durch Auswertung der detektierten Veränderung des Nahfelds ausgebildet ist,

- dass die Speisung (11) eine Resonanzschaltung (19) aufweist,
- dass die Resonanzschaltung (19) und die Antenne (10) zusammengenommen in der Übertragungsrichtung (22) eine Resonanz-Eingangsimpedanz ($Z_R$) aufweisen und die Resonanzschaltung (19) die Resonanz-Eingangsimpedanz ($Z_R$) bei der Resonanzfrequenz in eine reelle Impedanz mit einem vorgegebenen Resonanz-Impedanzwert transformiert und
- dass die Antenne (10) eine von der Resonanzfrequenz verschiedene Antennenresonanzfrequenz aufweist.

2. Füllstandssensor (1) nach Anspruch 1, **dadurch gekennzeichnet, dass** die Speisung (11) eine Abschlussschaltung (20) aufweist und dass die Abschlussschaltung (20), die Resonanzschaltung (19) und die Antenne (10) zusammengenommen in der Übertragungsrichtung (22) eine Abschluss-Eingangsimpedanz ($Z_E$) aufweisen und die Abschlussschaltung (20) die Abschluss-Eingangsimpedanz ($Z_E$) auf den Leitungsimpedanzwert einstellt.

3. Füllstandssensor (1) nach Anspruch 2, **dadurch gekennzeichnet, dass** die Abschlussschaltung (20) eine Lambda-Viertel-Leitung aufweist, wobei die Lambda-Viertel-Leitung vorzugsweise unter Verwendung einer Luftstrecke realisiert ist.

4. Füllstandssensor (1) nach einem der Ansprüche 1 bis 3, **dadurch gekennzeichnet, dass** die Antennenresonanzfrequenz größer als die Resonanzfrequenz ist.

5. Füllstandssensor (1) nach einem der Ansprüche 1 bis 4, **dadurch gekennzeichnet, dass** die Resonanzfrequenz in einem Frequenzbereich von Mikrowellen liegt.

6. Füllstandssensor (1) nach einem der Ansprüche 1 bis 5, **dadurch gekennzeichnet, dass** die Antenne (10) zum unmittelbaren Kontakt mit dem Füllmedium ausgebildet ist.

7. Füllstandssensor (1) nach einem der Ansprüche 1 bis 6, **dadurch gekennzeichnet, dass** die Steuerung (12) zur Signalisierung des detektierten Füllstands des Füllmediums ausgebildet ist.

8. Füllstandssensor (1) nach einem der Ansprüche 1 bis 7, **dadurch gekennzeichnet, dass** die Speisung (11) einen zylinderförmigen Innenleiter (14) und einen hohlzylinderförmigen Außenleiter (15) zur Übertragung der elektromagnetischen Wellen aufweist und der Außenleiter (15) und der Innenleiter (14) koaxial zueinander angeordnet sind.

9. Füllstandssensor (1) nach Anspruch 8, **dadurch gekennzeichnet, dass** ein Abschnitt (23) des Innenleiters (14) die Antenne (10) bildet.

10. Füllstandssensor nach Anspruch 8 oder 9, **dadurch gekennzeichnet, dass** die Resonanzschaltung (19) und/oder die Abschlussschaltung (20) zwischen dem Innenleiter (14) und dem Außenleiter (15) angeordnet sind bzw. ist.

11. Füllstandssensor (1) nach einem der Ansprüche 8 bis 10, **dadurch gekennzeichnet, dass** der Außenleiter (15) Kühlrippen (16) aufweist.

12. Füllstandssensor (1) nach einem der Ansprüche 1 bis 11, **dadurch gekennzeichnet, dass** die Resonanzschaltung (19) ein Dielektrikum (17) und einen Hochfrequenz-Absorber (18) aufweist, wobei das Dielektrikum (17) vorzugsweise ein Glas, insbesondere ein metallverschmolzenes Glas ist.

13. Füllstandssensor (1) nach Anspruch 12, **dadurch gekennzeichnet, dass** das Dielektrikum (17) auch ein Prozessfenster ist.

**14.** Füllstandsensor (1) nach einem der Ansprüche 1 bis 13, **dadurch gekennzeichnet, dass** der Resonanz-Impedanzwert im Intervall von 150 Ohm bis 300 Ohm liegt.

**15.** Füllstandsensor (1) nach einem der Ansprüche 1 bis 14, **dadurch gekennzeichnet, dass** der Füllstandsensor (1) an der Antenne (10) ein Modenfilter (13) aufweist und dass das Modenfilter (13) ausgebildet ist, Hohlleitermoden in einem Behälter zu vermeiden.

**16.** Füllstandsensor (1) nach Anspruch 15, **dadurch gekennzeichnet, dass** das Modenfilter (13) ein Horn (25) mit einem Horninnenraum (26) aufweist, dass die Antenne (10) in den Horninnenraum (26) hineinragt und dass sich der Horninnenraum (26) in der Übertragungsrichtung (22) stetig aufweitet.

**17.** Füllstandsensor (1) nach Anspruch 16, **dadurch gekennzeichnet, dass** eine Querschnittsfläche (27) in Bezug auf die Übertragungsrichtung (22) des Horninnenraums (26) kreisrund ist und dass ein Radius (28) der Querschnittsfläche (27) derart unter Berücksichtigung einer Geometrie eines Innenraums eines Behälters und einer höchsten anzunehmenden Permittivität eines Füllmediums bestimmt ist, sodass eine Anregung von Hohlleitermoden im Behälter vermieden wird.

**18.** Füllstandsensor (1) nach Anspruch 17, **dadurch gekennzeichnet, dass** der Radius (28) ein minimaler Radius des Horninnenraums (26) ist.

**19.** Füllstandsensor (1) nach einem der Ansprüche 16 bis 18, **dadurch gekennzeichnet, dass** das Horn (25) Ausnehmungen (29) zum Eindringen eines Füllmediums in den Horninnenraum (26) aufweist.

**Claims**

**1.** Fill level sensor (1) for detecting a level of a fill medium in a container,

- wherein the fill level sensor (1) comprises a generator (8) having a feed line (9), an antenna (10), a supply (11) and a controller (12),
- wherein the generator (8) is designed to generate electromagnetic waves having a resonant frequency and output the electromagnetic waves via the feed line (9) having a line impedance with a line impedance value,
- wherein the supply (11) is arranged between the feed line (9) and the antenna (10) and is designed to transmit the electromagnetic waves from the feed line (9) to the antenna (10), **characterized in**

- **that** the antenna (10) is designed to radiate the electromagnetic waves into a container with a fill medium,
- **that** a transmission of the electromagnetic waves occurs in a transmission direction (22) from the feed line (9) via the supply (11) to the antenna (10),
- **that** the controller (12) is designed to detect a change of electromagnetic waves radiated by the antenna (10) in a near field around the antenna (10) by a fill level change of a fill medium in a container and to detect a fill level of the fill medium in the container by evaluating the detected change in the near field,
- **that** the supply (11) has a resonant circuit (19),
- **that** the resonant circuit (19) and the antenna (10) together have a resonant input impedance ($Z_R$) in the transmission direction (22), and the resonant circuit (19) transforms the resonant input impedance ($Z_R$) at the resonant frequency into a real impedance having a predetermined resonant impedance value, and
- **that** the antenna (10) has an antenna resonant frequency different from the resonant frequency.

**2.** Fill level sensor (1) according to claim 1, **characterized in that** the supply (11) comprises a terminating circuit (20) and that the terminating circuit (20), the resonant circuit (19) and the antenna (10) together have a terminating input impedance ($Z_E$) in the transmission direction (22) and the terminating circuit (20) sets the terminating input impedance ($Z_E$) to the line impedance value.

**3.** Fill level sensor (1) according to claim 2, **characterized in that** the terminating circuit (20) has a quarter wavelength line, wherein the quarter wavelength line is preferably implemented using an air gap.

**4.** Fill level sensor (1) according to any one of claims 1 to 3, **characterized in that** the antenna resonant frequency is greater than the resonant frequency.

**5.** Fill level sensor (1) according to any one of claims 1 to 4, **characterized in that** the resonant frequency is in a frequency range of microwaves.

**6.** Fill level sensor (1) according to any one of claims 1 to 5, **characterized in that** the antenna (10) is designed for direct contact with the fill medium.

**7.** Fill level sensor (1) according to any one of claims 1 to 6, **characterized in that** the controller (12) is designed to signal the detected fill level of the fill medium.

**8.** Fill level sensor (1) according to any one of claims 1 to 7, **characterized in that** the supply (11) has a cylindrical inner conductor (14) and a hollow cylindrical outer conductor (15) for transmitting the electromagnetic waves, and the outer conductor (15) and the inner conductor (14) are arranged coaxially with respect to one another.

9. Fill level sensor (1) according to claim 8, **characterized in that** a section (23) of the inner conductor (14) forms the antenna (10).

10. Fill level sensor according to claim 8 or 9, **characterized in that** the resonant circuit (19) and/or the terminating circuit (20) are/is arranged between the inner conductor (14) and the outer conductor (15).

11. Fill level sensor (1) according to any one of claims 8 to 10, **characterized in that** the outer conductor (15) has cooling fins (16).

12. Fill level sensor (1) according to any one of claims 1 to 11, **characterized in that** the resonant circuit (19) has a dielectric (17) and a high-frequency absorber (18), wherein the dielectric (17) is preferably a glass, in particular a metal-fused glass.

13. Fill level sensor (1) according to claim 12, **characterized in that** the dielectric (17) is also a process window.

14. Fill level sensor (1) according to any one of claims 1 to 13, **characterized in that** the resonance impedance value is in the interval from 150 ohms to 300 ohms.

15. Fill level sensor (1) according to any one of claims 1 to 14, **characterized in that** the fill level sensor (1) has a mode filter (13) at the antenna (10) and that the mode filter (13) is designed to avoid waveguide modes in a container.

16. Fill level sensor (1) according to claim 15, **characterized in that** the mode filter (13) has a horn (25) with a horn interior (26), that the antenna (10) extends into the horn interior (26), and that the horn interior (26) widens continuously in the transmission direction (22).

17. Fill level sensor (1) according to claim 16, **characterized in that** a cross-sectional area (27) is circular with respect to the transmission direction (22) of the horn interior (26), and that a radius (28) of the cross-sectional area (27) is determined taking into account a geometry of an interior of a container and a highest permittivity to be assumed of a fill medium such that excitation of waveguide modes in the container is avoided.

18. Fill level sensor (1) according to claim 17, **charac-**

**terized in that** the radius (28) is a minimum radius of the horn interior (26).

19. Fill level sensor (1) according to any one of claims 16 to 18, **characterized in that** the horn (25) has recesses (29) for penetration of a fill medium into the horn interior (26).

## Revendications

1. Capteur de niveau de remplissage (1) permettant de détecter un niveau de remplissage d'un milieu de remplissage dans un récipient,

- dans lequel le capteur de niveau de remplissage (1) présente un générateur (8) pourvu d'une ligne d'alimentation (9), une antenne (10), un dispositif d'alimentation (11) et un dispositif de commande (12),
- dans lequel le générateur (8) est réalisé pour générer des ondes électromagnétiques ayant une fréquence de résonance et pour sortir les ondes électromagnétiques par la ligne d'alimentation (9) présentant une impédance de ligne ayant une valeur d'impédance de ligne,
- dans lequel le dispositif d'alimentation (11) est disposé entre la ligne d'alimentation (9) et l'antenne (10) et est réalisé pour transmettre les ondes électromagnétiques de la ligne d'alimentation (9) à l'antenne (10),
**caractérisé**

**en ce que** l'antenne (10) est réalisée pour émettre les ondes électromagnétiques dans un récipient avec un milieu de remplissage,
**en ce qu'**une transmission des ondes électromagnétiques est effectuée dans une direction de transmission (22) de la ligne d'alimentation (9) à l'antenne (10) en passant par le dispositif d'alimentation (11),
**en ce que** le dispositif de commande (12) est réalisé pour détecter une modification d'un champ proche autour de l'antenne (10) par des ondes électromagnétiques émises par l'antenne (10) par une modification de niveau de remplissage d'un milieu de remplissage dans un récipient, et pour détecter un niveau de remplissage du milieu de remplissage dans le récipient par l'évaluation de la modification détectée du champ proche,

- **en ce que** le dispositif d'alimentation (11) présente un circuit de résonance (19),
- **en ce que** le circuit de résonance (19) et l'antenne (10) présentent ensemble dans la direction de transmission (22) une impédance d'entrée de résonance ($Z_R$), et le circuit de résonance (19) transforme l'impédance d'entrée de résonance ($Z_R$) à la fréquence de résonance en une impédance réelle ayant une valeur d'impédance de résonance prédéfinie, et

- **en ce que** l'antenne (10) présente une fréquence de résonance d'antenne différente de la fréquence de résonance.

2. Capteur de niveau de remplissage (1) selon la revendication 1, **caractérisé en ce que** le dispositif d'alimentation (11) présente un circuit de terminaison (20), et **en ce que** le circuit de terminaison (20), le circuit de résonance (19) et l'antenne (10) ensemble présentent dans la direction de transmission (22) une impédance d'entrée terminale ($Z_E$), et le circuit de terminaison (20) règle l'impédance d'entrée terminale ($Z_E$) sur la valeur d'impédance de ligne.

3. Capteur de niveau de remplissage (1) selon la revendication 2, **caractérisé en ce que** le circuit de terminaison (20) présente une ligne quart d'onde, la ligne quart d'onde étant de préférence réalisée en utilisant un entrefer.

4. Capteur de niveau de remplissage (1) selon l'une quelconque des revendications 1 à 3, **caractérisé en ce que** la fréquence de résonance d'antenne est supérieure à la fréquence de résonance.

5. Capteur de niveau de remplissage (1) selon l'une quelconque des revendications 1 à 4, **caractérisé en ce que** la fréquence de résonance est comprise dans une plage de fréquence des micro-ondes.

6. Capteur de niveau de remplissage (1) selon l'une quelconque des revendications 1 à 5, **caractérisé en ce que** l'antenne (10) est réalisée pour le contact direct avec le milieu de remplissage.

7. Capteur de niveau de remplissage (1) selon l'une quelconque des revendications 1 à 6, **caractérisé en ce que** le dispositif de commande (12) est réalisé pour signaler le niveau de remplissage détecté du milieu de remplissage.

8. Capteur de niveau de remplissage (1) selon l'une quelconque des revendications 1 à 7, **caractérisé en ce que** le dispositif d'alimentation (11) présente un conducteur intérieur cylindrique (14) et un conducteur extérieur cylindrique creux (15) pour transmettre les ondes électromagnétiques, et le conducteur extérieur (15) et le conducteur intérieur (14) sont disposés de manière coaxiale l'un par rapport à l'autre.

9. Capteur de niveau de remplissage (1) selon la revendication 8, **caractérisé en ce qu'**une partie (23) du conducteur intérieur (14) constitue l'antenne (10).

10. Capteur de niveau de remplissage selon la revendication 8 ou 9, **caractérisé en ce que** le circuit de résonance (19) et/ou le circuit de terminaison (20) est/sont disposé(s) entre le conducteur intérieur (14) et le conducteur extérieur (15).

11. Capteur de niveau de remplissage (1) selon l'une quelconque des revendications 8 à 10, **caractérisé en ce que** le conducteur extérieur (15) présente des ailettes de refroidissement (16).

12. Capteur de niveau de remplissage (1) selon l'une quelconque des revendications 1 à 11, **caractérisé en ce que** le circuit de résonance (19) présente un diélectrique (17) et un absorbeur haute fréquence (18), dans lequel le diélectrique (17) est de préférence du verre, en particulier du verre moulé.

13. Capteur de niveau de remplissage (1) selon la revendication 12, **caractérisé en ce que** le diélectrique (17) est aussi une fenêtre de process.

14. Capteur de niveau de remplissage (1) selon l'une quelconque des revendications 1 à 13, **caractérisé en ce que** la valeur d'impédance de résonance est comprise dans l'intervalle de 150 ohms à 300 ohms.

15. Capteur de niveau de remplissage (1) selon l'une quelconque des revendications 1 à 14, **caractérisé en ce que** le capteur de niveau de remplissage (1) présente au niveau de l'antenne (10) un filtre de mode (13), et **en ce que** le filtre de mode (13) est réalisé pour éviter des modes de guide d'onde dans un récipient.

16. Capteur de niveau de remplissage (1) selon la revendication 15, **caractérisé en ce que** le filtre de mode (13) présente un cornet (25) ayant un intérieur de cornet (26), **en ce que** l'antenne (10) fait saillie à l'intérieur du cornet (26), et **en ce que** l'intérieur du cornet (26) s'élargit en continu dans la direction de transmission (22).

17. Capteur de niveau de remplissage (1) selon la revendication 16, **caractérisé en ce qu'**une superficie de section transversale (27) est circulaire par rapport à la direction de transmission (22) de l'intérieur du cornet (26), et **en ce qu'**un rayon (28) de la superficie de section transversale (27) est déterminé en tenant compte d'une géométrie d'un intérieur d'un récipient et d'au moins une permittivité croissante maximale d'un milieu de remplissage de façon à éviter une excitation de modes de guide d'onde dans le récipient.

**18.** Capteur de niveau de remplissage (1) selon la revendication 17, **caractérisé en ce que** le rayon (28) est un rayon minimal de l'intérieur du cornet (26).

**19.** Capteur de niveau de remplissage (1) selon l'une quelconque des revendications 16 à 18, **caractérisé en ce que** le cornet (25) présente des évidements (29) pour l'entrée d'un milieu de remplissage à l'intérieur du cornet (26).

Fig. 1

Fig. 2

13

29

24

26

22

25

Fig. 3a

Fig. 3b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5675259 A
- GB 2569540 A